## Europäisches Patentamt

## European Patent Office

## Office européen des brevets

(19)

(11) Veröffentlichungsnummer: **0 002 839**
**A1**

(12) # EUROPÄISCHE PATENTANMELDUNG

(21) Anmeldenummer: **78101878.3**

(22) Anmeldetag: **29.12.78**

(51) Int. Cl.²: **F 24 D 11/02, F 24 D 17/00,**
**F 24 J 3/04, F 25 B 29/00**

(30) Priorität: **31.12.77 DE 2759181**

(43) Veröffentlichungstag der Anmeldung: **11.07.79**
**Patentblatt 79/14**

(84) Benannte Vertragsstaaten: **BE FR GB IT NL SE**

(71) Anmelder: **Innovationsförderungs-und Beteiligungsgesellschaft mbH, Kiessteige 20, D-7417 Pfullingen (DE)**

(72) Erfinder: **Weiss, Hans, Gartenstrasse 49, D-7321 Birenbach (DE)**

(74) Vertreter: **Lutz, Johannes Dieter, Dr., Römerstrasse 40, D-7250 Leonberg (DE)**

(54) **Verfahren zur Raumtemperierung sowie nach diesem Verfahren zu beheizendes Gebäude.**

(57) Es wird ein Verfahren zur Raumtemperierung und Wärmeenergieversorgung eines Gebäudes vorgeschlagen, sowie ein für die Anwendung dieses Verfahrens geeignetes Gebäude, das unter Ausnutzung von in der Gebäudeumwelt vorhandenen Wärme bzw. Wärmestrahlung mittels einer Wärmepumpe mit minimalem Aufwand an Fremdenergie beheizbar ist. Größere Teile der Gebäudeaußenwand sind doppelschalig ausgeführt, wobei eine äußere, aus der Umwelt durch Strahlungsabsorption und/oder Konvektion Wärme aufnehmende und als Wärmespeicher wirkende äußere Wandung (20) vorgesehen ist, der mittels des primärseitigen Wärmetauschers (56) der Wärmepumpe (46) Wärme entziehbar ist. Diese Außenwandung (20) ist gegenüber dem inneren, die Raumzellen (10, 12, 14, 16) des Gebäudes begrenzenden Baukörpers (18) durch eine etwa 10 cm starke Polystyrol-Schaumstoffschicht (24) thermisch isoliert. Die der Außenwand (20) entzogene Wärme wird mittels der Wärmepumpe (46) auf ein höheres Temperaturniveau gebracht und mittels des sekundärseitigen Wärmetauschers (60) der Wärmepumpe (46) auf großflächige Wandteile (40) des inneren Baukörpers (18) übertragen. Die zur Brauchwasseraufbereitung (54) erforderliche Wärme wird während der Aktiv-Perioden der Wärmepumpe (46) der überhitzten Gasphase ihres Arbeitsmediums (62) entzogen.

Anmelder:
Innovationsförderungs- und
Beteiligungsgesellschaft mbH
Kiessteige 2o
7417 Pfullingen

0002839

## VERFAHREN ZUR RAUMTEMPERIERUNG SOWIE NACH DIESEM VERFAHREN ZU BEHEIZENDES GEBÄUDE.

Die Erfindung betrifft ein Verfahren zur Raumtemperierung unter Verwendung mindestens einer Wärmepumpe,durch die die mittels eines flüssigen Mediums einem Körper entzogene Wärmeenergie nach ihrer Auf-bzw.Abwertung mindestens einem Speicher zugeführt und aus diesem zur Raumtemperierung abgezogen wird.

Es ist allgemein bekannt,zur Beheizung von Räumen Wärmepumpen einzusetzen.

Als ein Nachteil dieses bekannten Heizverfahrens ist anzusehen,daß Wärmepumpen häufig nicht die benötigte große Temperaturdifferenz bewältigen können.Aus diesem Grunde werden üblicherweise solche Beheizungssysteme ergänzt durch ein konventionelles Heizsystem,sodaß zur Energieerzeugung ein Doppelheizsystem (Bivalentsystem)entsteht,wobei die konventionelle Heizungsanlage den Spitzenbedarf an Wärme deckt.

Ein weiterer Nachteil besteht darin,daß bei Ausfall eines Energieträgers solche Bivalentsysteme entweder nicht mehr voll arbeitsfähig sind bzw.bei Ausfall des elektrischen Stromes die Wärmepumpe ebenfalls ausfällt.

Des weiteren benötigen solche Heizsysteme Radiatoren sowie einen Wärmespeichertank als Pufferspeicher.Um hierbei eine behagliche Raumtemperierung zu erzielen,muß mit hohen Heizwassertemperaturen gefahren werden,was bedeutet,daß der Ein-

- 3 -

satz der Wärmepumpe nur bis etwa +5$^{O}$C wirtschaftlich vertretbar ist.

Darüberhinaus ist der Einsatz von Wärmepumpen vornehmlich in der kälteren Jahreszeit unwirtschaftlich,da Luftwärmepumpen ständig abgetaut werden müssen.Schließlich wird für die Unterbringung des Wärmespeichertanks ein erheblicher Raum benötigt,ganz abgesehen davon,daß zum Betrieb der konventionellen Heizung die Umwelt schädigende Emissionen anfallen.

Der vorliegenden Erfindung liegt die Aufgabe zugrunde,ein Verfahren der eingangs beschriebenen Art zu schaffen,welches die vorstehend erläuterten Nachteile der bekannten Heiz — systeme unter Verwendung von Wärmepumpen vermeidet.

Zur Lösung dieser Aufgabe ist erfindungsgemäß vorgesehen, daß man als Speicher die die zu temperierende Räumlichkeit umgebende Gebäudemasse verwendet.

Durch diese Maßnahme werden folgende Vorteile erreicht:

Dadurch,daß die Gebäudemasse als Strahlungskörper bzw.Energiespeicher herangezogen wird,läßt sich eine behagliche Raumtemperierung erzielen,ohne daß das Wärmeträgermedium auf bisher übliche hohe Temperaturen erwärmt werden muß.Der Grund hierfür liegt darin,daß nur noch eine unwesentliche Temperaturdifferenz zwischen der Wärmequelle und der Wärmesenke(Gebäudemasse)benötigt wird.

Demgemäß ermöglicht das erfindungsgemäße Verfahren mit einer mittleren Heizwassertemperatur von lediglich 24$^{O}$bis 28$^{O}$C zu fahren.Dies wird nicht zuletzt durch die Vergrößerung der Abstrahlungsoberfläche durch Heranziehen der Gebäudemasse erzielt.

Ein weiterer wesentlicher Vorteil der Erfindung liegt darin, daß zur Beheizung von Räumen keine Heizkörper mehr benötigt werden.Ebenso kann auf einen Wärmespeichertank für Heizwasser

0002839

verzichtet werden.

Das erfindungsgemäße Verfahren ermöglicht somit,für die Beheizung von Räumen auf das konventionelle Bivalenzsystem völlig zu verzichten,sodaß Emissionen nicht anfallen.

Damit wird auch die üblicherweise umfangreiche Regelautomatik nicht mehr benötigt.

Wegen des geringen Strombedarfs der beim erfindungsgemäßen Verfahren einzusetzenden Wärmepumpe,kann zu deren Stromversorgung im Notfall ein konventionelles Notstromaggregat eingeschaltet werden,sodaß eine ununterbrochene Wärmeversorgung gewährleistet ist.

Aufgrund der Verwendung der Gebäudemasse als Wärmespeicher ist die Speicherkapazität des Heizverfahrens so groß,daß in gleichen Zeiträumen im Vergleich zu den konventionellen Heizmethoden nur ein Bruchteil der Temperaturabsenkung in der Zeiteinheit stattfindet.

Der als Lieferant der Wärmeenergie zu benutzende Körper kann vielgestatlig sein.Zum Beispiel kann die Wärmeenergie der Erde oder aus dem Grundwasser oder aus einem Fluß entzogen werden.Dies setzt allerdings ein entsprechendes Gelände voraus,das die Möglichkeit zum Wärmeentzug bietet.

Ein besonderes Merkmal der Erfindung ist darin zu sehen,daß der Körper zum Entzug der Wärmeenergie in die Baumasse integriert wird.Diese Maßnahme bietet den Vorteil,daß kein besonderes Areal benötigt wird.

Durch Heranziehung der Baumasse kann,wie aus einer uner - schöpflichen Energiequelle,das Strahlungsaufkommen von Diffusstrahlung,Direktstrahlung und atmosphärischer Strahlung der Umgebung der Baumasse an deren Oberfläche aufgenommen werden.Wird über dieses Strahlungsaufkommen hinaus Energie

0002839

entnommen,gelangt die Wärmestrahlung der Umgebung zum Einsatz,die ihr Maximum im infraroten Bereich hat.Diese Energiequelle gelangt hauptsächlich während der Nachtzeit zum Einsatz.Auch bei großer Temperaturdifferenz zwischen Innen- und Außenmasse überwiegt der Wärmegewinn von außen den Wärmeverlust der inneren Baumasse durch eine geeignete Isolierung von außen um ein Vielfaches.

Weiterer Gegenstand der Erfindung ist ein unter Anwendung des erfindungsgemäßen Verfahrens beheizbares Gebäude mit wenigstens einer Raumzelle.Dieses Gebäude ist erfindungsgemäß dadurch gekennzeichnet,daß der Körper zum Entzug der Wärmeenergie eine das Gebäude mindestens teilweise umschließende Wandung bildet,in der ein mit der Wärmepumpe verbindbarer, aus einem Rohrleitungssystem gebildeter Wärmetauscher enthalten ist.

Eine bevorzugte Konstruktion sieht vor,daß die Gebäudewand doppelwandig ist,daß die äußere Wandung den Körper zum Entzug der Wärmeenergie bildet und von der inneren Wandung im Abstand vorgesehen und der zwischen beiden Wandungen vorhandene Zwischenraum durch eine ganzflächige Wärme-und Feuchtigkeitsisolierung ausgefüllt ist.

In diesem Falle übernimmt die innere Wandung die Aufgabe der Standsicherheit und der Wärmespeicherung zur Raumtemperierung.Die äußere Wandung erfüllt die Aufgabe der Energieaufnahme aus der Umwelt und deren Einspeicherung.Beide Wandungen sind,wie oben bereits angedeutet,hinsichtlich der Wärmeströmung und der Wasserdampfdiffusion abisoliert.

Durch die Gesetze der Wärmeströmung und deren Geschwindigkeit in verschiedenen Stoffen nimmt dabei die äußere Wandung die Temperatur der Umwelt an,während die innere Wandung die Gebäudeinnentemperatur bis zur Isolierung anstrebt. Die Isolierung verhindert einen Wärmeübergang zwischen beiden Wandungen.

Wird der äußeren Wandung durch Kühlung laufend Energie entzogen,strömt von der äußeren Oberfläche derselben laufend Energie nach,ohne daß die Oberflächentemperatur der Wandung weiter absinkt.

Auf verhältnismäßig einfache Weise kann hierbei die Oberfläche zur Aufnahme der Energiestrahlung noch vergrößert werden,beispielsweise durch Aufbringung eines Spezial-Energie-Absorptionsputzes,stark strukturiert.Das Maximum dieses Putzes kann gewollt für den infraroten Bereich ausgelegt werden, um die Wärmeabsorption zu erhöhen.Um die als Wärmespeicher dienende Baumasse nach außen abzuschirmen,um einen Wärmeübergang zu verhindern,ist es des weiteren günstig,die innere Wandung außer gegenüber der äußeren Wandung auch gegenüber dem Fundament und der Bedachung zu isolieren.Durch die dadurch erzielte besonders gute Speicherwirkung der Baumasse wird es ermöglicht,die Energiegewinne hauptsächlich an den Spitzenzeiten der Temperaturamplitude vorzunehmen.Da die Temperatur der äußeren Wandmasse gegenüber dem Amplitudenverlauf der Tagestemperatur eine zeitliche Phasenverschiebung hat,ist es nicht lohnend,die Energie-Aufwertung am Vormittag vorzunehmen.Die wirtschaftlichste Energie-Aufwertung läßt sich in der Regel zwischen 12$^{00}$Uhr und 20$^{00}$Uhr erzielen,auch wenn in dieser Zeit ein billigerer Nachtstrom nicht zur Verfügung steht.

Dabei kann es ausreichen,wenn mindestens der Fußboden wenigstens einer zu temperierenden und als Speicher wirkenden Raumzelle des Gebäudes durch einen mit der Wärmepumpe verbindbaren,insbesondere als Rohrleitungssystem ausgelegten Wärmetauscher beheizbar ist.Vorzugsweise wird man jedoch sämtliche Begrenzungsflächen eines Raumes,also auch die Wände und die Decke,beheizbar ausbilden,wobei die Möglichkeit besteht,insbesondere in der kalten Jahreszeit,die in den einzelnen Raumbegrenzungswänden vorhandenen Wärmetauscher in Reihe nacheinander zu schalten.Dadurch entsteht in allen Räumen ein ideales Temperaturprofil,welches unübertroffene Behaglichkeit gewährleistet.

Vorzugsweise ist jede Raumzelle durch ein eigenes,insbesondere regelbares Wärmetauschersystem temperierbar.Somit
ist es möglich,die einzelnen Raumzellen,dem individuellen
Wunsch entsprechend,auf unterschiedliche Raumtemperaturen
zu halten,obgleich die die Raumzellen umschließende Baumasse den Wärmespeicher bildet.

In weiterer vorteilhafter Ausgestaltung eines solchen Gebäudes ist vorgesehen,die beiden Wärmetauschersysteme von äusserer und innerer Wandung bei Umgehung der Wärmepumpe direkt
untereinander verbindbar zu gestalten.Diese Maßnahme bietet
den Vorteil,daß in der Übergangszeit bei direkter Sonnenstrahlung die Temperatur der Speichermasse der äußeren Wandung über        diejenige der inneren Wandung ansteigt.Die
Spitzen dieser Temperaturamplitude können über ein Temperaturdifferenzventil gesteuert und direkt an die inneren Speichermassen abgegeben werden,solange das Wärmeträgermedium
zwischen beiden Massen zirkuliert.Der Wärmegewinn kann für
die kühlen Abend-und Nachtstunden genützt werden,ohne daß
hierfür die Wärmepumpe benötigt wird.Während der Abendkühle
steht somit eine zusätzliche,insbesondere kostenlose Temperierung der Raumzelle zur Verfügung.

Das erfindungsgemäße Verfahren bietet auch ganz spezielle
Vorteile im Sommer,wenn anstatt einer Beheizung eine Kühlung von Raumzellen gewünscht wird.Wird nämlich die äußere
Wandung mit der inneren Wandung unter Umgehung der Wärmepumpe kurzgeschlossen,kann der  tiefste Temperaturwert der
Tag-Nachttemperaturamplitude der kühlen Nacht-und Morgenstunden in das Gebäude eingespeichert werden.Bei Aufrechterhaltung der Zirkulation während der Nachtzeit und Unterbrechung derselben bei Tage  ist kostenlos eine funktionstüchtige Kühlung gewährleistet.

Sofern gemäß einer weiteren vorteilhaften Ausgestaltung des
Gebäudes durch Wärmetauscher in den Gebäudefundamenten,die
mit der Wärmepumpe zum Entzug der Erdwärme verbindbar sind,
den Fundamenten Wärme entzogen wird,kann die Gebäudeentwärmung noch vorteilhafter gestaltet werden,indem vom Erdreich über der Fundamentoberfläche in die Baumassen der Fundamente Kühlenergie einströmt.

Der Einsatz einer Ventilvorrichtung,z.B.eines Vierwegeventiles,ermöglicht sogar eine aktive Kühlung durch die Wärmepumpe,indem der Verdampfer der Wärmepumpe den inneren Baumassen die Wärmeenergie entzieht,sodaß nur angenehme Strahlungsenergie entsprechend der Temperatur herangezogen wird.Gegenüber einer herkömmlichen Raumklimatisierung ergibt sich dadurch der Vorteil,daß auf unangenehme Kühlgebläse verzichtet werden kann.

In weiterer Ausgestaltung der Erfindung ist eine Steuervorrichtung zum Steuern der Durchflußmenge des Mediums in der äußeren Wandung in Abhängigkeit der Temperaturaufnahme verschiedener äußerer Wandungsteile vorgesehen.Diese Steuervorrichtung ermöglicht eine der Einstrahlungsrichtung der Sonne angepaßte Kreislaufführung des Mediums in den Wärmetauscher,sodaß dort,wo die größte Wärmemenge anfällt, der Durchfluß des Mediums am größten ist,sodaß eine gute Ausnutzung der von der äußeren Wandung aus der Umgebung aufgenommenen Wärme möglich ist.

Für die Warmwasserbereitung werden Temperaturen von ca $40^{\circ}$ bis $45^{\circ}C$ benötigt.Die von der Wärmepumpe erzeugte Mediumtemperatur von ungefähr $26^{\circ}C$,welche für die Gebäudeerwärmung ausreicht,kann jedoch nicht für die Brauchwassererwärmung herangezogen werden.Hierzu könnte im Prinzip eine zweite Wärmepumpe zum Einsatz kommen,die dem Heizkreislauf der ersten Wärmepumpe Wärme entzieht und ausgangsseitig Wärme auf einem Temperaturniveau von $40^{\circ}$bis $45^{\circ}C$ abgibt.Die Erfindung vermeidet auch hier eine solche aufwendige und unwirtschaftliche Einrichtung,wenn eine Wärmepumpe verwendet wird,bei der als Vorstufe ihres Verflüssigers ein Vorwärmeaustauscher vorgeschaltet ist,zum Entzug der Überhitzungswärme des Verdampfungsmediums zur Erwärmung eines Brauchwasserspeichers.

Diese Maßnahme basiert auf der Überlegung,daß durch die vom Kompressor der Wärmepumpe in das System eingespeiste Arbeit zunächst zu einer Überhitzung des verdampften Arbeitsmediums der Wärmepumpe führt,bevor nach Abkühlung des überhitzten dampfförmigen Mediums bei niedrigerer und konstant bleibender Temperatur dessen Kondensationswärme abgegeben wirdDie Überhitzungswärme wird gemäß der erläuterten vorteilhaften Ausgestaltung des Gebäudes nutzbringend dazu verwendet,das höhere Temperaturniveau für die Warmwasseraufbereitung zu erreichen,ohne daß zusätzlich eine zweite Wärmepumpe benötigt wird.Auf diese Weise läßt sich für das Gesamtsystem ein höherer Wirkungsgrad erzielen.Damit die Funktionsfähigkeit des beschriebenen Verfahrens auch bei Temperaturen,die erheblich unter $0^{o}$C liegen gewährleistet ist,muß,wenn als Wärmeträger Wasser verwendet wird,diesem ein Frostschutzmittel beigemengt sein.

Weitere Einzelheiten der Erfindung sind in der sich an - schließenden Beschreibung eines in der Zeichnung gezeigten Ausführungsbeispieles eines erfindungsgemäßen Gebäudes erläutert.Es zeigen:

Fig.1  einen Längsschnitt durch ein schematisch dargestelltes Gebäude,das gemäß dem erfindungsgemäßen Verfahren temperiert wird,

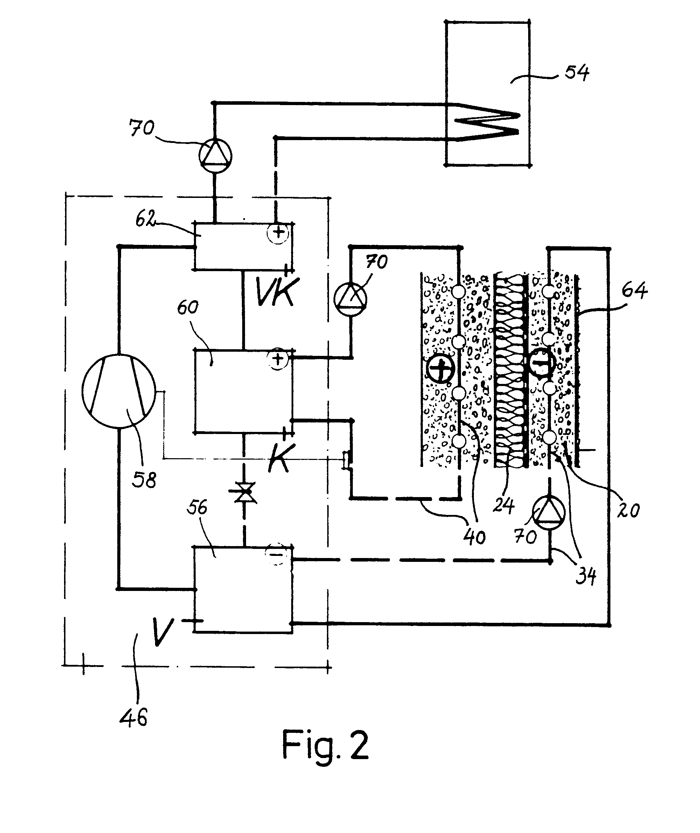

Fig.2  ein Funktionsschema zur Erläuterung der Wirkungsweise der Wärmepumpe,

Fig.3  eine Schaltung,aus der die Verbindungen der Wärmetauscher zum Entzug der Wärme aus den Außenwänden und aus den Fundamenten mit der Wärmepumpe ersichtlich ist.

Das gezeigte Gebäude weist einen mehrere Raumzellen 1o,12, 14,16 enthaltenden inneren Baukörper 18 auf,der vorzugsweise in Beton gefertigt ist.Dieser Baukörper ist vorzugsweise vollständig von einer Außenhaut20 umgeben,wobei zwischen dem Baukörper und der Außenhaut ein Zwischenraum 22 enthalten ist,der vollständig mit einer Isoliermasse 24 ausgefüllt ist.Die Isolierung kann beispielsweise aus Polyurethan-Hartschaum bestehen.

Mit 26 ist als Ganzes ein den Baukörper abdeckendes Dach bezeichnet.Auch zu diesem Dach ist der Baukörper durch eine Isolierung 28 isoliert.Außerdem ist der Baukörper 18 gegenüber den Fundamenten 3o und Kellergeschoß durch eine Isolierung 32 isoliert.Damit ist der innere Baukörper 18 von der Außenhaut bzw.den Fundamenten vollständig abgekapselt.

In der Außenhaut 2o ist ein Wärmetauschersystem 34 eingelegt,zu dessen Zu-und Abfljßleitungen mit 36 und 38 be - zeichnet sind.Zur Verdeutlichung des Kreislaufs des als Wärmeträger dienenden Mediums sind diese Leitungen außerhalb des gesamten Baukörpers dargestellt.Ebenso ist zwischen der Dacheindeckung und der Isolierung 28 ein Wärmetauschersystem 34 angeordnet.

Außerdem ist jeder Raumzelle ein im Baukörper 18 enthaltenes inneres Wärmetauschersystem 4o zugeordnet,die über eine Zuflußleitung 42 und eine Abflußleitung 44 mit mindestens einer Wärmepumpe 46 in Verbindung stehen.Ebenso stehen die Zu-und Abflußleitungen 36,38 mit dieser Wärmepumpe in Verbindung.Ein weiteres Wärmetauschersystem 48 ist im Fundament des Gebäudes enthalten,das über ein Ventil 5o mit der Wärmeenergie zuführenden Leitung 38 verbindbar ist.

Die gewünschte Raumtemperatur in den einzelnen Raumzellen kann mittels Thermostate 52 vorgewählt und konstant gehalten werden,wobei diese entweder in der betreffenden Raumzelle vorgesehen oder zu einer gemeinsamen Schaltanordnung zusammengefaßt sein können.Dabei sind deren Wärmefühler in der Rücklaufleitung 44 angeordnet und verändern entsprechend der getroffenen Vorwahl die Durchflußmenge in dem betreffenden Austauschersystem der Raumzelle,d.h.in der Zuflußleitung 42.

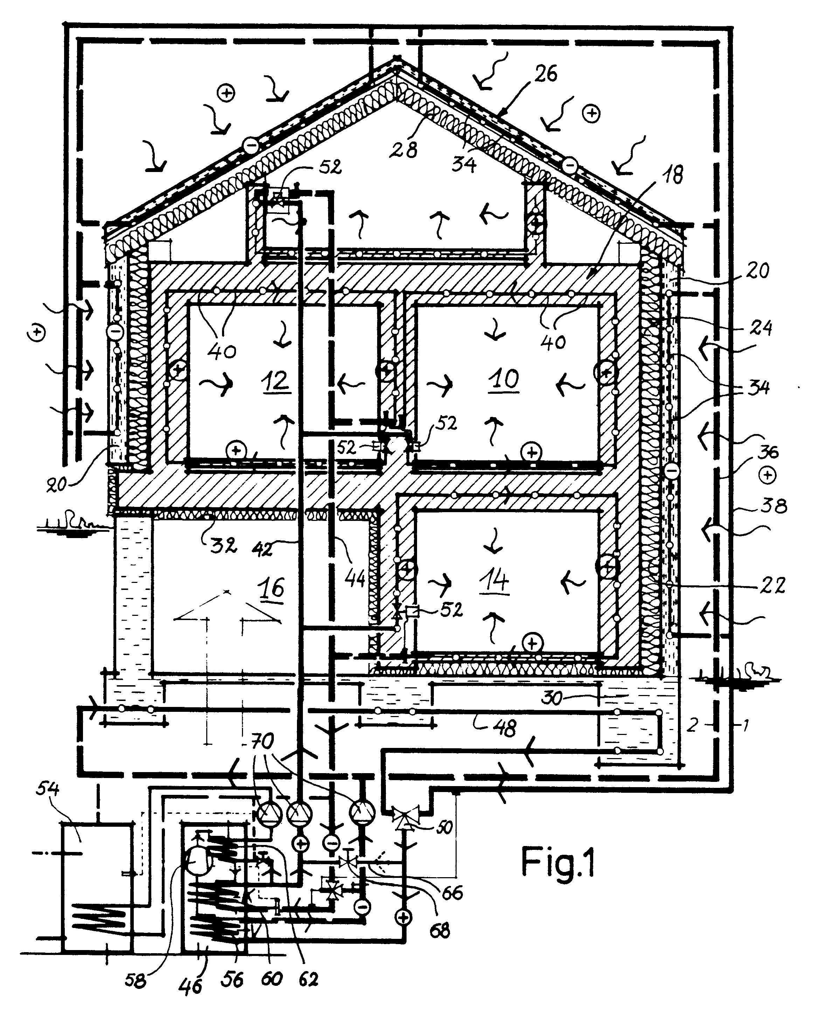

In Fig.1 ist die Raumzelle 16 als Installationsraum für die Wärmepumpe 46 vorgesehen,die jedoch aus Gründen der Über-

sichtlichkeit außerhalb des Gebäudes dargestellt ist.

Dieser Wärmepumpe ist ein Warmwasserspeicher 54 angegliedert zur Erzeugung warmen Brauchwassers.Er besitzt einen Verdampfer 56,einen Verdichter 58 und einen Verflüssiger 6o. Zwischen dem Verdichter 58 und dem Verflüssiger 6o ist ein Vorwärmetauscher 62 zwischengeschaltet,durch den Überhitzungswärme dem Verdampfungsmedium der Wärmepumpe entzogen und dem Warmwasserspeicher 54 zugeführt wird.

Die Außenfläche der Außenhaut 2o ist mit einem Spezial- Energie-Absorptionsputz 64 von einer Schichtdicke von vorzugsweise 4 bis 6mm versehen,der stark strukturiert ist.

Die Wirkungsweise des erfindungsgemäßen Verfahrens zur Temperierung der Raumzellen ist folgende:

Bei Winterbedingungen werden die Energiegewinne nach der Aufwertung durch eine Wasser-anWasser-Wärmepumpe an die innere Baumasse bzw.den inneren Baukörper 18 abgegeben.Der Energietransport muß hierbei von der jeweiligen Außentemperatur bis zu einer mittleren Mediumtemperatur von beispielsweise 26$^{\circ}$C erfolgen,um eine gewünschte Raumtemperatur von beispielsweise 22$^{\circ}$C zu erzielen.

Da in den verschiedenen Raumzellen unterschiedliche Temperaturen erwünscht sind,werden die Baumassen,die den Speicher zur Aufnahme der Wärmeenergie bilden,durch die thermostatischen Ventile 52 auf die gewünschte Behaglichkeitstemperatur eingestellt.Der Melder hierfür ist die Rücklauftemperatur der Baumassen-Wärmeaustauscher 4o.

Der frostgeschützte Kreislauf des Wärmeträgermediums entnimmt der Außenhaut,welche an ihrer Oberfläche von der Umweltenergie durch Einstrahlung nachgespeichert wird,Wärme auf und bringt diese über die Leitung 38 in den Verdampfer 56 der Wärmepumpe 46.Der entwärmte Rücklauf fließt wiederum zurück in das Wärmeaustauschersystem 34 der Außenhaut 2o mit kälterem Temperaturniveau,von neuem aufnahmebereit,wodurch der Kreislauf der Energiegewinnung geschlossen ist.

Der Energiegewinn wird durch Verdampfung des Verdampfungsmediums der Wärmepumpe übernommen,durch Kompressionsarbeit des Verdichters 58 in seiner Temperatur erhöht und danach durch Verflüssigung an den warmen Kreislauf des inneren Wärmetauschersystems 4o abgegeben.Zuvor muß jedoch der Dampf des Verdampfermediums,welcher Träger des Wärmeinhaltes aus der Verdichtungsarbeit und der Überhitzungswärme ist,durch den Vorwärmetauscher 62 hindurchfließen,der das Trägermedium der Warmwasserbereitung erwärmt.

Über die Zuflußleitung 42 und die Rücklaufleitung 44 sind die Baukörperspeichermassen mit dem Verflüssiger 6o der Wär- mepumpe verbunden,welche z.B.auf 22$^{o}$bis 26$^{o}$C aufgespeichert werden.Die Wärmeabgabe an das Innere der Raumzellen erfolgt durch Wärmestrahlung und geringfügiger Konvektionsströmung. Dabei erfolgt im Winter die Verteilung vorzugsweise derart, daß der Fußboden,die Wände und die Decken nacheinander in Reihe geschaltet sind.Dadurch entsteht in allen Räumen ein ideales Temperaturprofil.

Beheizung während der Übergangszeit:

Bei direkter Sonnenstrahlung steigt die Temperatur der Speichermasse des Baukörpers 18 über die innere Speicherwassertemperatur an.Die Spitzen dieser Temperaturamplitude können über einen By-Pass 66 und über ein Temperaturdifferenzventil 68 direkt an das innere Wärmetauschersystem 4o abgegeben werden,solange das Wärmeträgermedium zwischen beiden Massen zirkuliert,was mittels entsprechender Umwälzpumpen 7o bewerkstelligt wird.Der Wärmegewinn kann für die kühlen Abend- und Nachtstunden genützt werden,unter Umgehung der Wärmepumpe.

Temperierung der Raumzellen im Sommer:

Wird die Verbindung der äußeren Wärmetauschersysteme 34 und der inneren Wärmetauschersysteme 4o über den By-Pass 66 hergestellt,dann kann der Tiefstwert der Tag-Nachttemperaturamplitude der kühlen Nacht-und Morgenstunden in das Gebäude eingespeichert werden.Somit wird bei Aufrechterhaltung der Zirkulation während der Nachtzeit und Unterbrechung derselben bei Tage eine angenehme Kühlung bei minimalsten Betriebskosten ermöglicht.Dabei kann das Fundamentwärmetauschersystem 48 noch zur Auskühlung des Fundaments bzw.zur Gebäudeentwärmung mit herangezogen werden.

Die mit Hilfe des erfindungsgemäßen Verfahrens erzielbare Energieersparnis ist anhand der nachfolgenden vergleichenden Wirtschaftlichkeitsberechnung veranschaulicht:

Wenn W den Wärmenutzen in kcal/DM

$W_1$ das elektrische Wärmeäquivalent(86okcal/kW)

$P_E$ den Preis pro kW elektrischer Leistung

$\varepsilon$ die Leistungsziffer der Wärmepumpe und

$\varphi$ deren Wirkungsgrad bezeichnen,und für

$\varepsilon$ und $\varphi$ die bei einem erfindungsgemäßen Gebäude erzielten typischen Werte von 4,5 bzw.o.88 eingesetzt werden,erhält man für den Wärmenutzen

$$W = \frac{W_1 \times \varepsilon \times \varphi}{P_E} = \frac{860 \times 4,5 \times 0,88}{0,1} = \underline{\underline{34\ o56 kcal/DM}}$$

Unter vergleichbaren baulichen Voraussetzungen ergibt sich für eine Ölfeuerung

$$W = \frac{\text{spezifische Wärmeleistung kcal/l} \times \text{feuerungstechnischer Wirkungsgrad} \times \text{Betriebs-Wirkungsgrad}}{\text{Einheitspreis DM/l}}$$

$$= 17\ 827\ kcal/DM,$$

wenn man den feuerungstechnischen Wirkungsgrad mit o,9,den Betriebswirkungsgrad einer mit Öl betriebenen Heizanlage mit o,7 und den Einheitspreis,der natürlich variieren kann,mit

o,31 DM/l ansetzt.

Aus dieser Gegenüberstellung ist ersichtlich,daß bei gleichen Kosten das erfindungsgemäße Verfahren ca die doppelte
Energiemenge liefert wie eine herkömmliche Ölheizung.

Das Gebäude,auf das sich die oben angegebene Wärmenutzungsrechnung bezieht war wie folgt aufgebaut:

Das Gebäude hatte 860 m$^3$umbauten Raum.Davon entfielen auf
das unbeheizte Kellergeschoß ca 3oo m$^3$.Beheizt waren das sich
nach oben anschließende Erdgeschoß mit ebenfalls ca 3oo m$^3$
umbauten Raum.Dieses Volumen wurde auf der konstanten Temperatur von 22$^o$C Innentemperatur gehalten.Das Dachgeschoß
mit einem Innenraumvolumen von ca 26o m$^3$ war lediglich temperiert,d.h.es wurde im Winter auf einer Temperatur von 16$^o$C
gehalten.

Doppelschalig ausgebildet waren die Wände des Erdgeschosses
und die Giebelwände des Dachgeschosses.Außerdem waren auf
der Südseite des Daches auf einer Dachfläche von ca 9o m$^2$
Wärmetauscherrohre für die Energiegewinnung verlegt.Im Dachbereich ist die Doppelschaligkeit nicht erforderlich,jedoch
muß das Dach auf der Innenraumseite isoliert sein.In denjenigen Bereichen,in denen die Wände des Hauses doppelschalig
ausgeführt waren,betrug die Wandstärke der die Außenhaut 2o
bildenden Betonwand 12 cm und die Wandstärke der den inneren
Baukörper 18 bildenden Betonwände war 14 cm.Die Wandstärke
der zwischen der Außenhaut 2o und dem inneren Baukörper 18
angeordneten Isolationsschicht 24 betrug 1o cm.Diese bestand
aus einem handelsüblichen Polysterol-Hartschaumstoff(Styropor-PS 2o).Zur Isolation können auch Polyurethan-Schaumstoffplatten verwendet werden.

Die in die Außenhaut 2o und den inneren Baukörper 18 einbetonierten Wärmetauscherrohre 34 bzw.4o waren als flexible
Polyäthylen-Rohre ausgebildet.Diese waren mit spiralförmigem Verlauf jeweils in einer gemeinsamen Ebene verlegt und zwar mit einer hinführenden und einer diese fortsetzenden rückführenden Spirale.Dadurch wird über die gesamte Austauscherfläche gesehen ein gleichmäßiges Temperaturniveau in der Austauscherfläche erzielt.Pro $m^2$ Wandfläche werden im Normalfall etwa 6-7m PE-Rohr verlegt und die doppelte Länge in den Wänden des Badezimmers.Die Ebenen,in denen die Austauscherrohre 34 bzw.4o der Außenhaut 2o bzw.des inneren Baukörpers 18 verlegt waren,liegen auf beiden Seiten der Isolationsschicht 24 in unmittelbarer Nachbarschaft derselben.Der Abstand der Wärmetauscherrohre von der Isolationsschicht ist etwa gleich dem Durchmesser der Wärmetauscherrohre 34 bzw,4o.Diese haben einen Außendurchmesser von 2o mm und einen Innendurchmesser von 16mm. Sie sind jeweils an der der Isolierschicht 24 zugewandten Seite einer Baustahlmatte befestigt,die gleichzeitig die Bewehrung für die Außenhaut 2o bzw.die Wände des inneren Baukörpers 18 bildet.

Die Austauscherrohre 34 der Außenhaut 2o sind auf diese Weise im größtmöglichen Abstand von der der Gebäudeumwelt zugewandten Oberfläche der Außenhaut 2o angeordnet,über die die Umwelt-Wärme aufgenommen wird.Ebenso sind die Austauscherrohre 4o der inneren Gebäudewände 18 in größtmöglichem Abstand von derjenigen Fläche der Innenwände angeordnet,über die die Wärme an den Gebäudeinnenraum abgegeben wird.Dadurch erzielt man, über den Wandquerschnitt gesehen,ein für die Energieaufnahme und -abgabe optimales Temperaturprofil.

Die Steuerung der Wärmepumpe und der mit dieser gekoppelten Wärmetauscher 34 und 4o erfolgt über einen Temperaturmelder im Rücklauf des Wärmetauschers 4o der inneren Gebäudewand 18. Sinkt die Rücklauftemperatur unter einen einstellbaren Wert von beispielsweise 21$^{\circ}$C ab,so wird die Wärmepumpe 46 aktiviertSolange die Wärmepumpe 46 arbeitet beträgt die Vorlauftemperatur im Wärmetauscher 4o der Gebäudeinnenwand 18 ca 28$^{\circ}$C. Da ein Großteil der solchermaßen eingekoppelten Wärmemenge zunächst von dem durch die inneren Gebäudewände 18 gebildeten Wärmespeicher aufgenommen wird,ändert sich die Rücklauftem-

0002839

peratur zunächst nur wenig.Wegen der Speicherwirkung des inneren Baukörpers 18 und des von seiner der Isolationsschicht24 zugewandten Ebene,in der die Wärmetauscherrohre 4o verlegt sind,zu seiner dem Innenraum zugewandten Seite hin abfallenden Temperaturprofils ändert sich auch die Temperatur an der inneren Oberfläche nur geringfügig und zwar etwa in demselben Maß wie die mittels des Temperaturmelders erfaßte Rücklauftemperatur,sodaß diese direkt ein Maß für die Raumtemperatur im Gebäude ist.Durch den Rücklauftemperaturmelder,der die Wärmepumpe 46 aktiviert,sobald die Rücklauftemperatur unter den einstellbaren Mindestwert sinkt und die Pumpe 46 wieder abschaltet,sobald der einstellbare Sollwert überschritten wird, was ein Indiz dafür ist,daß der durch den inneren Baukörper18 gebildete Wärmespeicher "voll"ist,wird mit einfachsten Mitteln eine wirkungsvolle Temperaturregelung im Gebäude erzielt, deren Stabilität auch durch erhebliche Schwankungen der Aussentemperatur nicht beeinträchtigt ist.

Von Bedeutung ist auch die Speicherwirkung der 12 cm starken Außenhaut 2o des Gebäudes,durch die ein jäher Sturz der Aussentemperatur zunächst einmal abgefangen werden kann,ohne daß sich der Wirkungsgrad der Wärmepumpe nennenswert ändert,weil aufgrund der Speicherwirkung der Außenhaut 2o die Temperatur am Ort der Austauscherrohre 34 sehr viel langsamer absinkt als an der direkt mit der Umwelt in thermischem Kontakt stehenden Außenfläche der Außenhaut 2o.Erst wenn eine solche Aussentemperaturabsenkung länger anhält als etwa 1 Tag folgt auch die Temperatur am Ort der Austauscherrohre 34 der Außentemperatur.Der Tag-Nacht-Temperatursprung hat demgemäß auf den Wirkungsgrad der Wärmepumpe keinen nennenswerten Einfluß. Erst wenn die Außentemperatur-Absenkung über längere Zeit anhält,zieht auch das Temperaturniveau am Ort der Austauscherrohre 34 nach,mit der Folge,daß dann ein etwas verschlechterter Wirkungsgrad der Wärmepumpe 46 in Kauf genommen werden muß.Da solche Kälteperioden zumindest in den gemäßigten Klimazonen erfahrungsgemäß nicht sehr lange anhalten,wirken sich solche Temperatureinbrüche nicht nennenswert auf die Wirtschaftlichkeit der erfindungsgemäßen Gebäudeheizung aus.Eine aus der Speicherwirkung der Außenhaut 2o resultierende günstige Eigenschaft des erfindungsgemäßen Gebäudes ist auch die, daß eine durch die Wärmeentnahme aus diesem Speicher resultierende Abkühlung desselben praktisch nur an seiner der Isolationsschicht 24 zugewandten Seite stattfindet,während die Temüeratur an der Außenfläche dieses Speichers praktisch gleich der Umwelttemperatur bleibt.dadurch wird vermieden, daß die Außenfläche des Gebäudes vereisen kann.

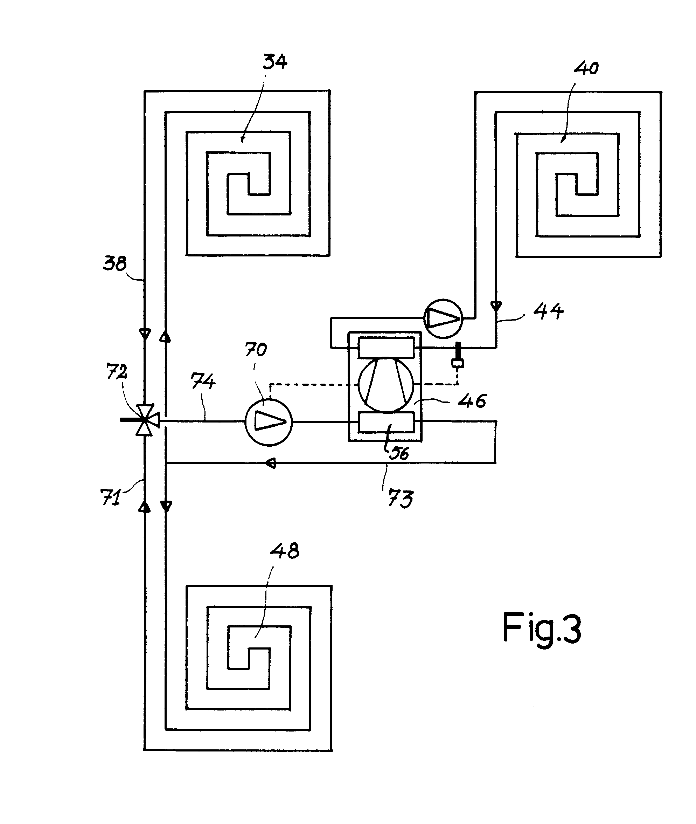

Die Fig.3 zeigt eine besonders vorteilhafte Verbindung des in der Außenwabdmasse 2o angeordneten Wärmetauschers 34 und des in der Fundamentmasse 3o angeorndeten Wärmetauschers 48 mit der Wärmepumpe 46.Von diesen Wärmetauschern 34 und 48 ist jeweils nur eine Tauschereinheit dargestellt.Es kann jeweils eine Mehrzahl solcher Tauschereinheiten 34 bzw.48 vorgesehen sein,die parallel geschaltet sind.Die Rücklaufleitungen 38 und 71 der Tauschereinheiten 34 und 48 sind über ein Mischventil 72 miteinander gekoppelt.Von diesem Mischventil 72 aus führt eine gemeinsame Wärmetransportleitung 74 zum Verdampfer56 der Wärmepumpe 46.Das Wärmetransportmedium,dem im Verdampfer 56die eingekoppelte Wärme entzogen wird,fließt über die Rücklaufleitung 73 zu den Wärmetauschern 34 und 48 zurück.

Mit Hilfe des Mischventils 72 ist ein bestimmtes Mischungsverhältnis der aus den beiden Wärmetauschern 34 und 48 zur Wärmepumpe 46 strömenden Transportmittelmengen einstellbar.Etwa gleiche Dimensionierung der beiden Wärmetauscher 34 und 48 vorausgesetzt,beträgt dieses Mischungsverhältnis 1:1.

Wegen des Temperaturabfalls $\Delta T$ über dem Verdampfer 56 der Wärmepumpe arbeitet diese Schaltung wie folgt:

ist die Temperatur des Transportmittels im Wärmetauscher 34 um mehr als $\Delta T$ höher als die Temperatur des Wärmetransportmittels 48, wird überschüssige Wärme in den Wärmetauscher 48 eingespeichert, solange die Wärmepumpe 46 arbeitet.Wie oben erwähnt,wird die Wärmepumpe 46 über die Temperatur in der Rücklaufleitung 44 des Wärmetauscher-Systems 4o gesteuert,über das aufgewertete Wärme auf die Innenwandmasse 18 und ins Innere des Gebäudes übertragen wird. Ist die Temperatur im Wärmetauscher 48 -beispielsweise während der Nacht- höher als die Temperatur des Wärmetransportmittels im Wärmetauscher 34, dann wird nur dem Wärmetauscher 48 Wärme entzogen. Jedoch wird -wegen des Temperatursprunges $\Delta T$ über dem Verdampfer 56 der Wärmepumpe 46- keine "überschüssige" Wärme in den Wärmetauscher 34 der Außenwand zurückgekoppelt.

Patentansprüche

1. Verfahren zur Temperierung und zur Wärmeenergieversorgung eines Gebäudes
unter Verwendung einer Wärmepumpe,die über einen primärseitigen Wärmetauscher einem Wärmereservoir Wärme entzieht,die unter Einsatz von Fremdenergie bei erhöhter Temperatur auf mindesten einen sekundärseitigen Wärmetauscher übertragbar ist,der seinerseits Wärme an einen Speicher abgibt,dem die für die Raumtemperierung erforderliche Wärmemenge entnehmbar ist,
dadurch gekennzeichnet,daß primärseitig die Wärme einer mit der Gebäudeumwelt in thermischem Kontakt stehenden Außenwandmasse(2o)des Gebäudes(18,2o)entzogen wird,und daß als sekundärseitiger Speicher eine gegenüber der Aussenwandmasse(2o)thermisch isolierte Innenwandmasse(18) ausgenutzt wird,über deren,den Raumzellen(1o,13,14,16) zugewandte Oberfläche die Wärme an den Gebäudeinnenraum abgegeben wird.

2. Verfahren nach Anspruch 1,
dadurch gekennzeichnet,daß die zur Brauchwasseraufbereitung erforderliche Wärmemenge der während der Aktiv-Phasen der Wärmepumpe(46)durch deren Kompressionsarbeit überhitzten gasförmigen Phase des Arbeitsmediums der Wärmepumpe(46)entzogen wird.

3. Unter Anwendung des Verfahrens nach Anspruch 1· oder Anspruch 2 beheiztes Gebäude mit wenigstens einer Raumzelle, dadurch gekennzeichnet,daß in einer das Gebäude mindestens

- 2o -

teilweise umschließenden äußeren Wandung(2o)ein den primärseitigen Wärmetauscher(34)bildendes Rohrleitungssystem vorgesehen ist,über das die der äußeren Wandung(2o) entnehmbare Wärmemenge in die Wärmepumpe(46)einkoppelbar ist.

4. Gebäude nach Anspruch 3,
dadurch gekennzeichnet,daß die Gebäudeaußenwand doppelwandig ist,daß die äußere Wandung(2o)den Körper zum Entzug der Wärmeenergie bildet und von der inneren Wandung(18) im Abstand vorgesehen ist,und daß der zwischen beiden Wandungen vorhandene Zwischenraum(22)durch eine ganzflächige Wärme-und Feuchtigkeitsisolierung(24)ausgefüllt ist.

5. Gebäude nach Anspruch 4,
dadurch gekennzeichnet,daß die Wandstärke der äußeren Wandung(2o)mindestens ca 12 cm,die Stärke der Isolationsschicht(24) ca 1o cm und die Wandstärke der inneren Wandung(18)mindestens ca 14 cm beträgt.

6. Gebäude nach Anspruch 4 oder Anspruch 5,
dadurch gekennzeichnet,daß die innere Wandung(18)außer gegenüber der äußeren Wandung(2o)auch gegenüber dem Fundament(3o)und der Dachabdeckung(26)isoliert ist.

7. Gebäude nach einem der Ansprüche 3 bis 6,
dadurch gekennzeichnet,daß mindestens ein Teil der inneren Wandung(18)des Gebäudes mittels eines,insbesondere als Rohrleitungssystem(4o)ausgebildeten,sekundärseitig an die Wärmepumpe(46)anschließbaren Wärmetauschers beheizbar ist.

8. Gebäude nach einem der Ansprüche 4 bis 7,
dadurch gekennzeichnet,daß das Rohrleitungssystem des Wärmetauschers(34)der äußeren Wandung(2o)in einer Ebene verlegt ist,deren Abstand von der Isolationsschicht(24) wesentlich kleiner ist als ihr Abstand von der der Außentemperatur ausgesetzten äußeren Oberfläche der äußeren Wandung(2o).

9. Gebäude nach Anspruch 7 oder Anspruch 8,in Verbindung mit Anspruch 4, dadurch gekennzeichnet,daß das den sekundärseitigen Wärmetauscher bildende Rohrleitungssystem(4o),soweit es in den doppelschaltigen Wänden(18,2o)vorgesehen ist, in einer Ebene der inneren Wandung(18)verlegt ist,deren Abstand von der Isolationsschicht(24)wesentlich kleiner ist,als ihr Abstand von der dem Innenraum zugewandten Oberfläche der inneren Wandung(18).

1o. Gebäude nach Anspruch 3 und einem der vorhergehenden An-sprüche 7 bis 9, dadurch gekennzeichnet,daß die Rohrleitungssysteme der Wärmetauscher(34)der äußeren Wandung(2o)und/oder der inneren Wandung(18)aus biegbar-flexiblen Polyäthylenrohren mit einer Wandstärke von ca 2 mm und einem Außendurchmesser von ca 2o mm aufgebaut sind,die mit mäander-bzw. spiralförmigem Verlauf mit einer hinführenden und einer diese fortsetzenden,rückführenden Spirale in die äußere Wandung(2o)bzw.in die innere Wandung(18)einbetoniert sind.

11. Gebäude nach einem der vorhergehenden Ansprüche 3 bis 1o, dadurch gekennzeichnet,daß der Fußboden wenigstens einer zu temperierenden Raumzelle(1o,12,14,16)des Gebäudes durch einen sekundärseitig an die Wärmepumpe(46)anschließbaren, als Rohrleitungssystem(4o)ausgebildeten Wärmetauscher beheizbar ist.

12. Gebäude nach einem der Ansprüche 3 bis 11 mit einer Vielzahl von Raumzellen, dadurch gekennzeichnet,daß jede Raumzelle(1o,12,14,16) durch ein eigenes,insbesondere regelbares Wärmetauschersystem(4o)temperierbar ist.

13. Gebäude nach einem der Ansprühe 7 bis 12, dadurch gekennzeichnet,daß die beiden Wärmetauschersysteme(34,4o)von äußerer und innerer Wandung(2o,18)bei Umgehung der Wärmepumpe(46)zum Entzug der Erdwärme verbindbar sind.

14. Gebäude nach einem der Ansprüche 3 bis 13, gekennzeichnet durch Wärmetauscher (48) in den Gebäudefundamenten (3o), die mit der Wärmepumpe (46) zum Entzug der Erdwärme verbindbar sind.

15. Gebäude nach einem der Ansprüche 7 bis 14, dadurch gekennzeichnet, daß die Temperierung der Raumzellen (1o,12,14,16) über Thermostatventile (52) steuerbar ist, in Abhängigkeit von der Rücklauftemperatur im Wärmetauscher (4o) der inneren Wandung (18).

16. Gebäude nach einem der Ansprüche 3 bis 15, gekennzeichnet durch eine Steuervorrichtung zum Steuern der Durchflußmenge des Mediums in den Wärmetauschern (34) der äußeren Wandung (2o) in Abhängigkeit der Temperaturaufnahme verschiedener äußerer Wandungsteile.

17. Gebäude nach einem der Ansprüche 3 bis 16, insbesondere mit einer Wärmepumpe, die mindestens folgende Aggregate umfaßt: Verdampfer, Verdichter und Verflüssiger, dadurch gekennzeichnet, daß als Vorstufe des Verflüssigers ein Vorwärmeaustauscher (62) vorgeschaltet ist zum Entzug der Überhitzungswärme des Verdampfungsmediums zur Erwärmung eines Brauchwasserspeichers (54).

18. Gebäude nach einem der Ansprüche 3 bis 17, dadurch gekennzeichnet, daß auf die Außenfläche der äusseren Wandung (2o) ein Energie-Absorptionsputz (64), insbesondere rauher Struktur, aufgebracht ist.

19. Gebäude nach einem der Ansprüche 3 bis 18, dadurch gekennzeichnet, daß als Wärmeträger in den Wärmetauschern (34 bzw. 4o) Wasser mit einem Frostschutzmittel eingesetzt ist.

20. Gebäude nach einem der vorhergehenden Ansprüche 14-19, dadurch gekennzeichnet,daß die Leitung oder Leitungen(38) des primärseitigen Wärmetauschers(34)der Außenwandmassen (2o)und die Leitung oder Leitungen(71)des in den Fundamenten(3o)des Gebäudes angeordneten primärseitigen Wärmetauschers(48),durch welche Leitungen(38,71)Wärmetransportmedium zu dem Verdampfer(56)der Wärmepumpe(46)transportiert wird,durch eine Misch-Ventil-Einrichtung(72)miteinander verbunden sind,durch die ein bestimmtes Mischungsverhältnis der zu der Wärmepumpe(46)strömenden Wärmetransportmittel-Ströme einstellbar ist.

21. Gebäude nach Anspruch 2o, dadurch gekennzeichnet,daß bei etwa gleicher Dimensionierung der Wärmetauscher(34 und 48)in den Außenwandmassen(2o) bzw.in den Fundamenten(3o),dieses Mischungsverhältnis 1/1 ist.

Fig.1

Fig. 2

Fig.3

P78112E

| | Europäisches Patentamt | **EUROPÄISCHER RECHERCHENBERICHT** | 0002839 Nummer der Anmeldung EP 78 101 878.3 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 605 117 (H. WEISS)<br>* ganzes Dokument *<br>-- | 1-4,<br>7-11,<br>20 |
| X | DE - A - 2 539 274 (H. WEISS)<br>* ganzes Dokument *<br>-- | 1,3,<br>4,5,<br>19 |
| | DE - A - 2 517 182 (H. WEISS)<br>* ganzes Dokument *<br>-- | 1,3,<br>4,6 |
| | DE - A - 2 602 479 (E. KLAWITTER)<br>* ganzes Dokument *<br>-- | 1,3 |
| | DE - A - 2 336 667 (F. BOGDANSKI)<br>* Seite 3, Absätze 2 bis 5 *<br>-- | 1,3 |
| | US - A - 2 986 904 (C.C. WILLIAM-SON)<br>* Spalte 1, Zeile 69 bis Spalte 2, Zeile 4 *<br>-- | 6 |
| | DE - A - 2 400 155 (L.E. SCHOLZ)<br>* Seite 2, Absatz 1 *<br>-- | 13 |
| | ./.. | |

### KLASSIFIKATION DER ANMELDUNG (Int.Cl.²)

F 24 D   11/02
F 24 D   17/00
F 24 J    3/04
F 25 B   29/00

### RECHERCHIERTE SACHGEBIETE (Int. Cl.²)

F 24 D    3/00
F 24 D   11/00
F 24 D   17/00
F 24 J    3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |

| Recherchenort | Abschlußdatum der Recherche | Prüfer |
|---|---|---|
| Berlin | 21-03-1979 | PIEPER |

EPA form 1503.1  06.78

Europäisches Patentamt

**EUROPÄISCHER RECHERCHENBERICHT**

0002839
Nummer der Anmeldung
EP 78 101 878.3
- Seite 2 -

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 623 166 (MISSENARD) <br> * Anspruch 4; Fig. 2 und 3 * <br> -- | 18 | |
| P | DE - A - 2 649 273 (H. KIESLICH) <br> * Seite 3, Absatz 3 bis Seite 4 Absatz 7 * <br> -- | 1,3, 4,6 | |
| P | DE - A - 2 629 345 (KRUPP) <br> * Seite 4, Absatz 3; Fig., Position 5a * <br> -- | 2,17 | **RECHERCHIERTE SACHGEBIETE (Int. Cl.²)** |
| A | DE - A-2 350 001 (H. ULLRICH) <br> * ganzes Dokument * <br> -- | 1,3 | |
| A | DE - A - 2 624 147 (D. OHRENDORF) <br> * ganzes Dokument * <br> ---- | 1 | |

EPA Form 1503.2  06.78